# EUROPEAN PATENT APPLICATION

(11) **EP 3 787 346 A1**
(43) Date of publication of application: **03.03.2021**
(21) Application number: 19802823.5
(22) Date of filing: 07.05.2019
(51) Int. Cl.: H04W 48/10, H04W 48/16, H04W 84/12

(54) **WIRELESS COMMUNICATION DEVICE AND WIRELESS COMMUNICATION METHOD**

(30) Priority: 18.05.2018 JP 2018095905
(71) Applicant: Sony Corporation, 108-0075 Tokyo (JP)
(72) Inventor: MORIOKA, Yuichi, Tokyo 108-0075 (JP)
(74) Representative: D Young & Co LLP
(86) International application number: PCT/JP2019/018213
(87) International publication number: WO 2019/220946

(57) **Abstract**

The present technology relates to a wireless communication apparatus and a wireless communication method for allowing a wireless terminal station easily to select an appropriate connection destination from multiple wireless base stations.

The wireless communication apparatus includes an observation section that observes interference radio waves and a communication section that transmits a broadcast signal including interference information indicative of status of the interference radio waves, the wireless communication apparatus functioning as one of multiple wireless base stations included in a wireless communication system. The technology may be applied to the access points of a communication system based on the IEEE 802.11 standard, for example.

## Description

### [Technical Field]

The present technology relates to a wireless communication apparatus and a wireless communication method. More particularly, the technology relates to a wireless communication apparatus and a wireless communication method used advantageously to conduct wireless communication using multiple wireless base stations (access points).

### [Background Art]

Heretofore, it has been disclosed that (e.g., see PTL 1) in a wireless LAN system employing multiple access points (wireless base stations), a management server causes a display apparatus to display an average interference amount per cell at each access point on the basis of diverse operational information collected from the access points and from terminals (wireless terminal stations).

### [Citation List]

### [Patent Literature]

[PTL 1]
Japanese Patent Unexamined Publication No. 2008-535398

### [Summary]

### [Technical Problem]

However, according to the invention described in PTL 1, none of the terminals is capable of grasping the amount of interference at each access point. For this reason, it is difficult for the terminal to select an appropriate connection destination that would alleviate the effect of interference, for example.

The present technology has been devised in view of the above circumstances and is aimed at enabling a wireless terminal station to easily select an appropriate connection destination from among multiple wireless base stations.

### [Solution to Problem]

According to a first aspect of the present technology, there is provided a wireless communication apparatus including: an observation section configured to observe interference radio waves; and a communication section configured to transmit a broadcast signal including interference information indicative of status of the interference radio waves. The wireless communication apparatus functions as one of multiple wireless base stations included in a wireless communication system.

Also according to the first aspect of the present technology, there is provided a wireless communication method including: causing a wireless communication apparatus to observe interference radio waves; causing the wireless communication apparatus to transmit a broadcast signal including interference information indicative of status of the interference radio waves; and enabling the wireless communication apparatus to function as one of multiple wireless base stations included in a wireless communication system.

According to a second aspect of the present technology, there is provided a wireless communication apparatus including a communication section configured to receive from multiple wireless base stations a broadcast signal including interference information indicative of status of interference radio waves. The wireless communication apparatus functions as a wireless terminal station.

According to the first aspect of the present technology, interference radio waves are observed, and a broadcast signal including interference information indicative of status of the interference radio waves is transmitted.

According to the second aspect of the present technology, a broadcast signal including interference information indicative of status of interference radio waves is received from multiple wireless base stations.

### [Advantageous Effect of Invention]

Thus, according to the first or the second aspect of the present technology, a wireless terminal station is enabled to select an appropriate connection destination easily from among multiple wireless base stations.

Note that the advantageous effect outlined above is not limitative of the present disclosure. Further advantages will become apparent from a reading of the present disclosure.

### [Brief Description of Drawings]

[FIG. 1]

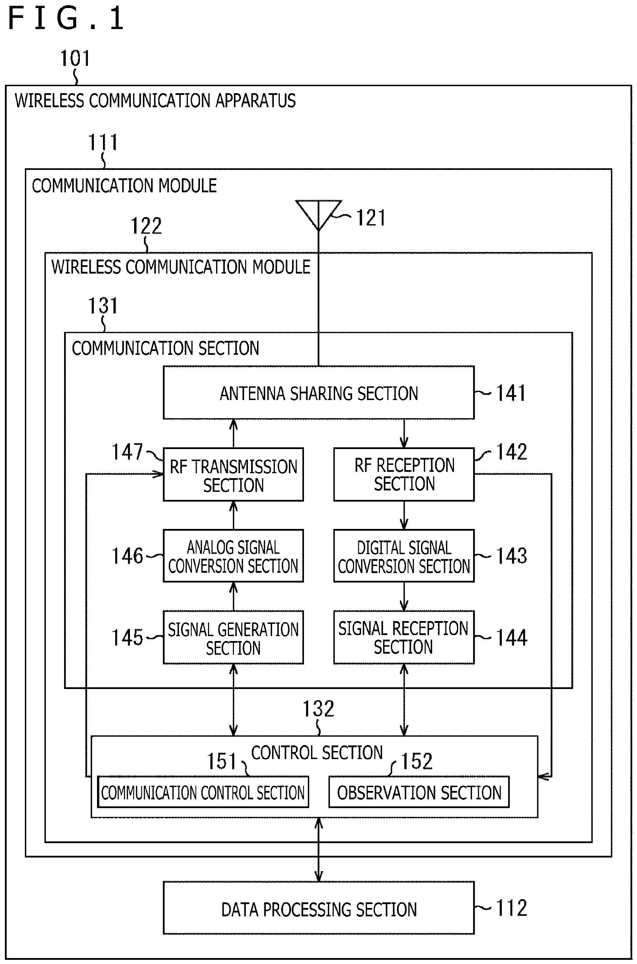

   FIG. 1 is a block diagram depicting a configuration example of a wireless communication apparatus (access point) to which the present technology is applied.
[FIG. 2]

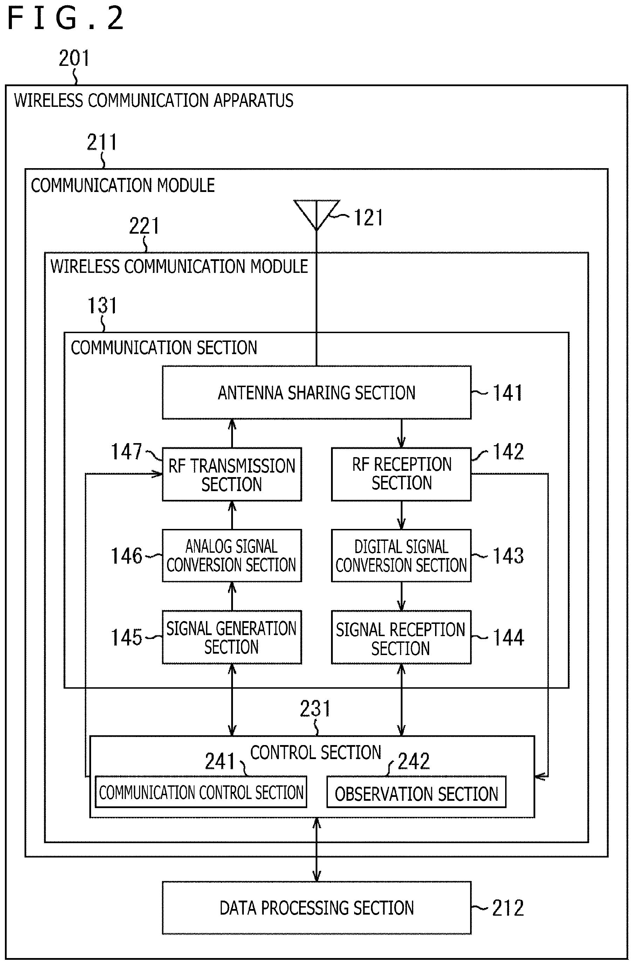

   FIG. 2 is a block diagram depicting a configuration example of a wireless communication apparatus (station) to which the present technology is applied.
[FIG. 3]

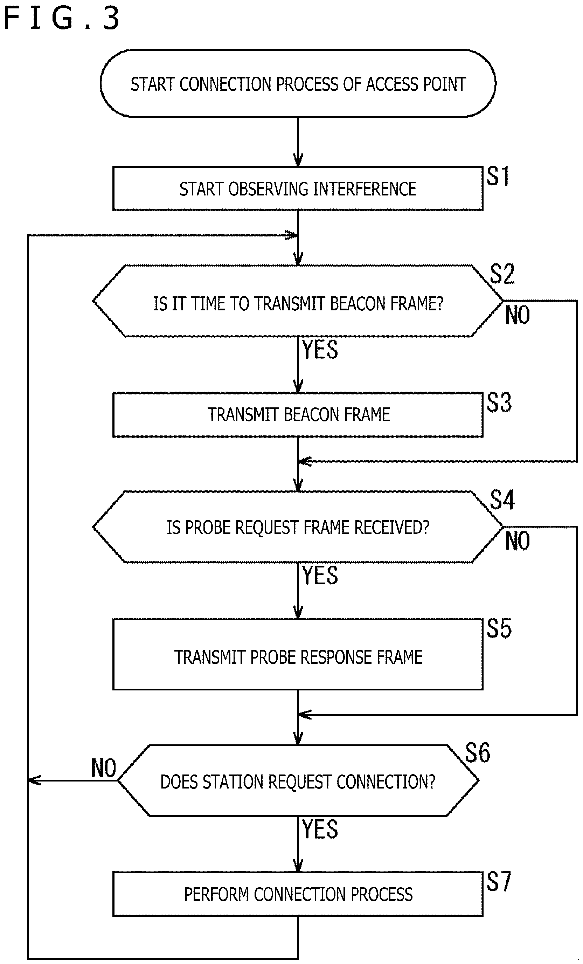

   FIG. 3 is a flowchart explaining a connection process performed by an access point.
[FIG. 4]

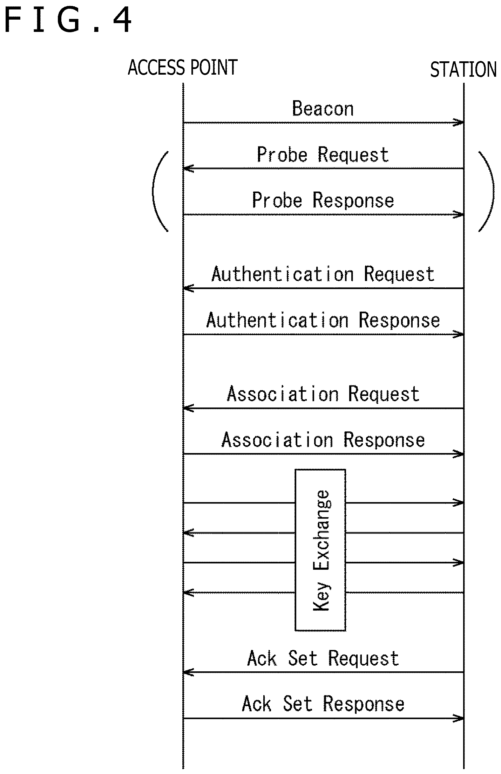

   FIG. 4 is a sequence diagram depicting a first example of the protocol for connection between an access point and a station.
[FIG. 5]

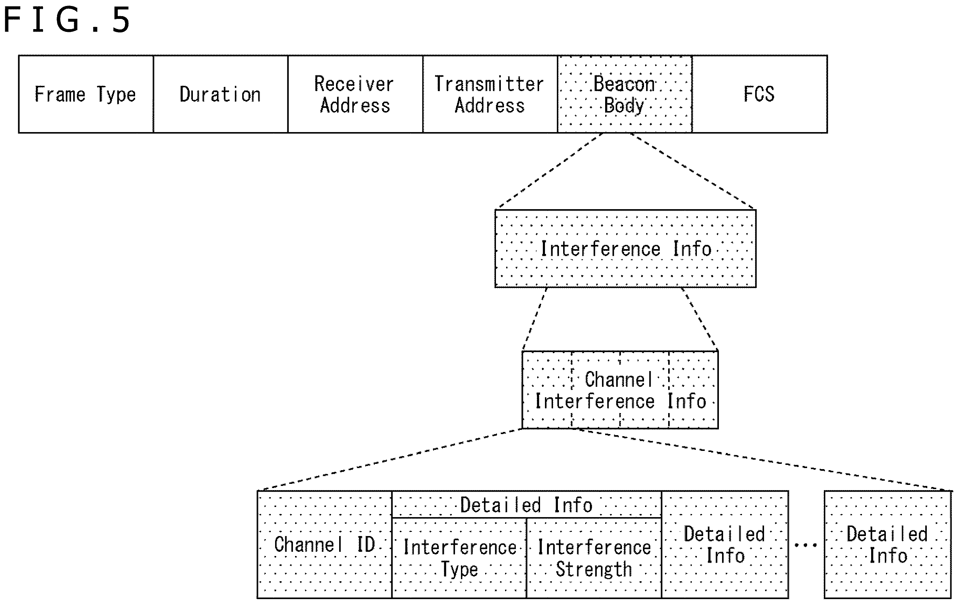

   FIG. 5 is a schematic diagram depicting a typical beacon frame format.
[FIG. 6]

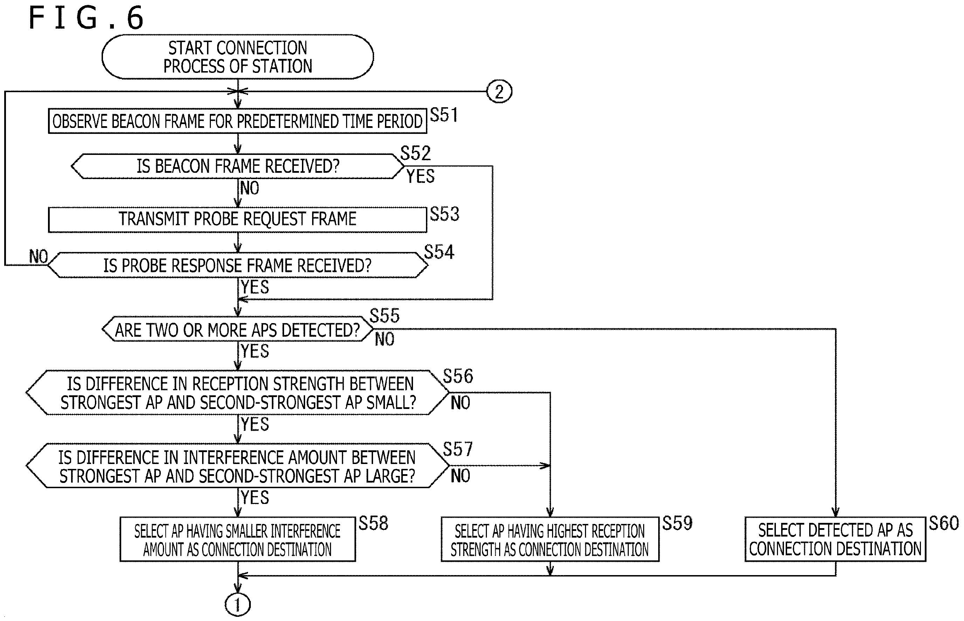

   FIG. 6 is a flowchart explaining a connection process performed by a station.
[FIG. 7]

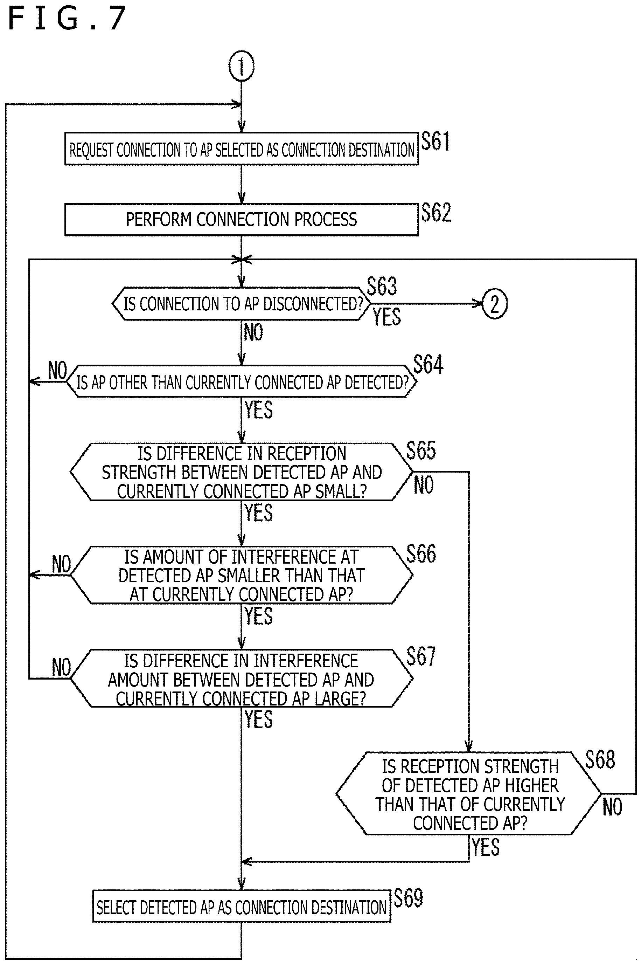

   FIG. 7 is another flowchart explaining the connection process performed by the station.
[FIG. 8]

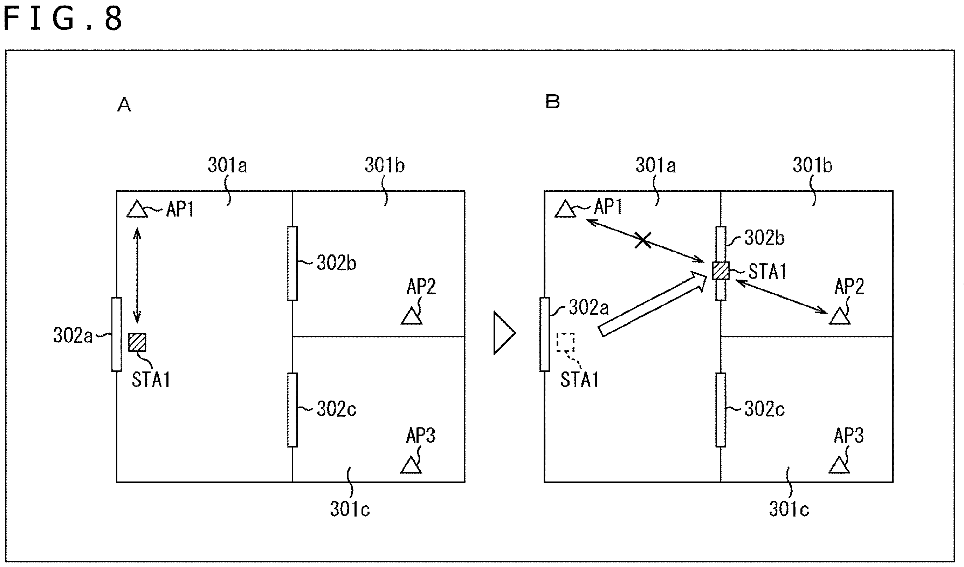

   FIG. 8 is a schematic diagram explaining a method by which a station selects a connection destination.
[FIG. 9]

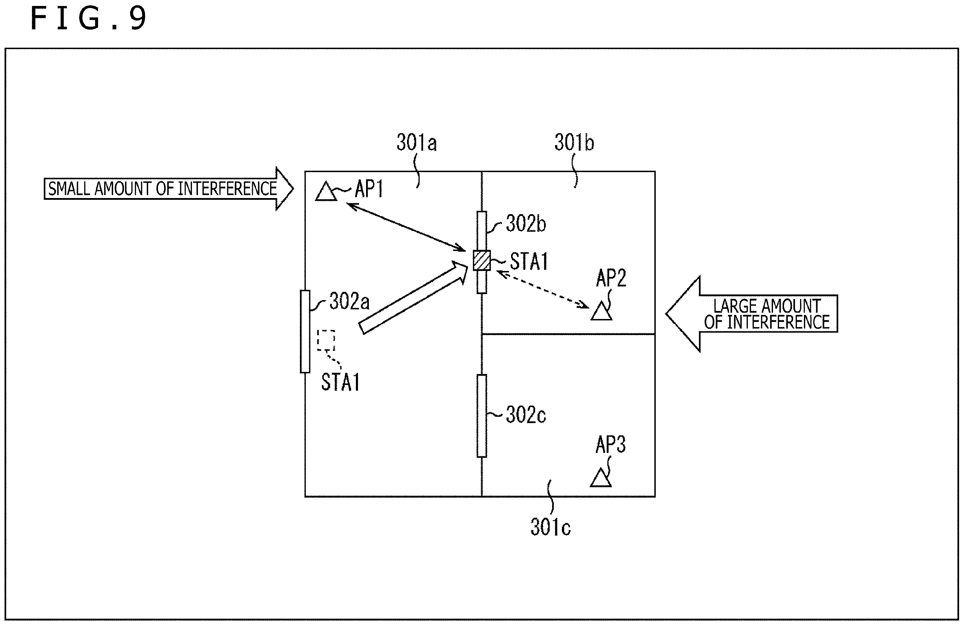

   FIG. 9 is another schematic diagram explaining the method by which the station selects the connection destination.
[FIG. 10]

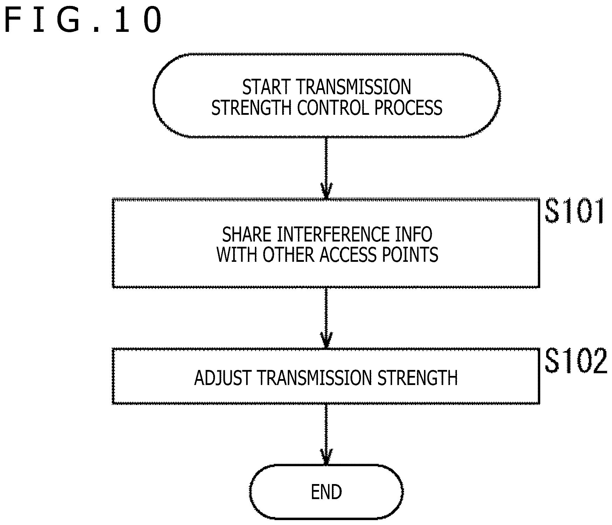

   FIG. 10 is a flowchart explaining a transmission strength control process.
[FIG. 11]

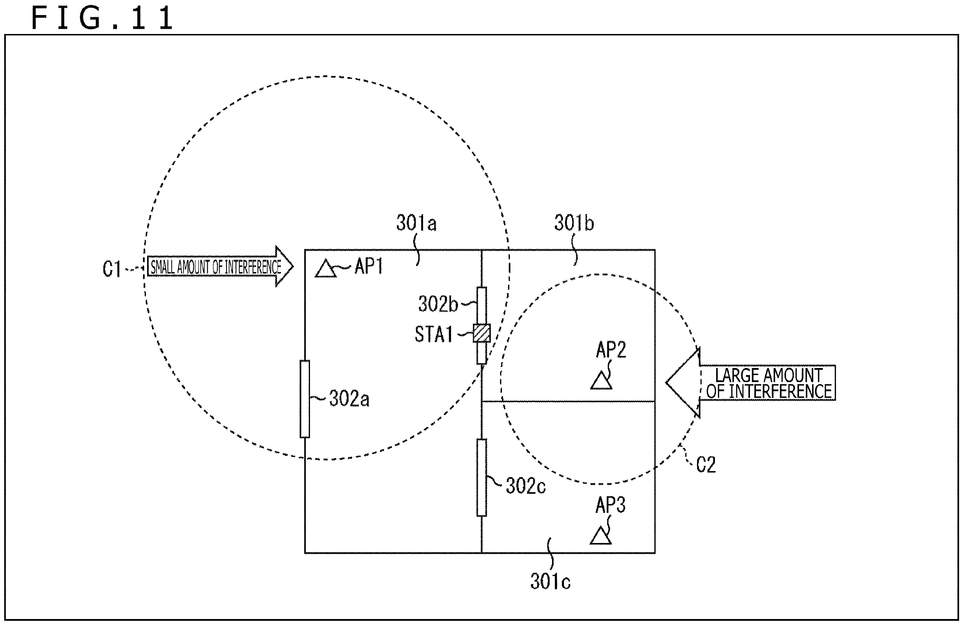

   FIG. 11 is a schematic diagram explaining a method of controlling the transmission strength of access points.
[FIG. 12]

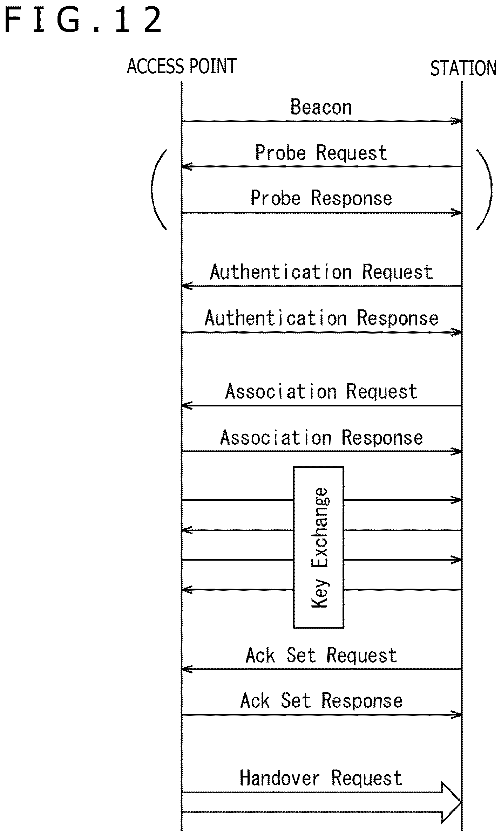

   FIG. 12 is a sequence diagram depicting a second example of the protocol for connection between the access point and the station.
[FIG. 13]

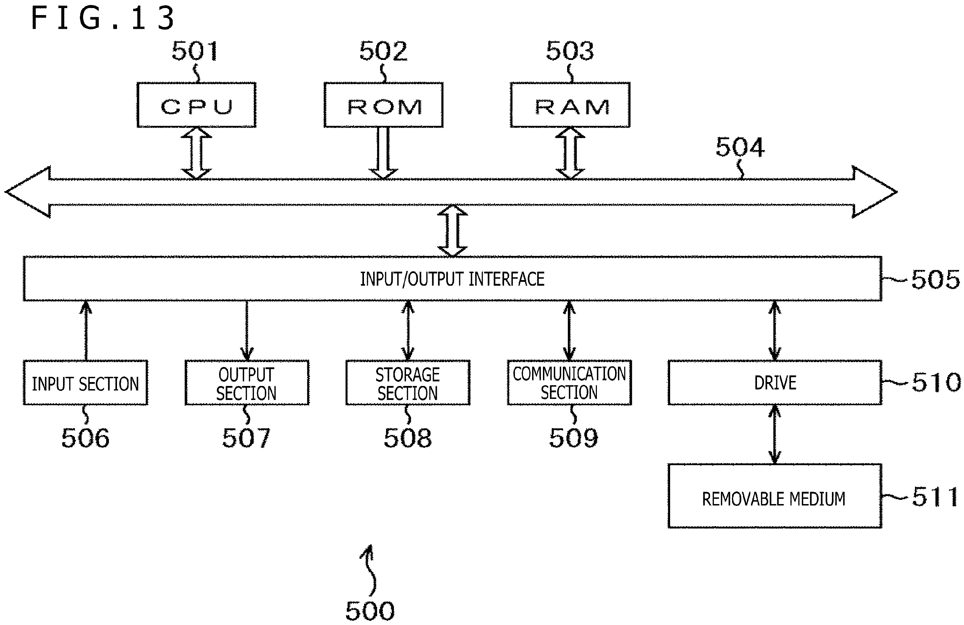

   FIG. 13 is a schematic diagram depicting a configuration example of a computer.

### [Description of Embodiment]

The embodiment for implementing the present technology are described below. The description is given under the following headings.
1. Embodiment
2. Modification Examples
3. Others

### <<1. Embodiment>>

The present technology is devised in such a manner that in a wireless communication system based on the IEEE 802.11 (wireless LAN) standard, for example, and equipped with multiple wireless base stations, a wireless terminal station is allowed to select an appropriate connection destination from among the multiple wireless base stations with a view to suppressing the effects of interference radio waves (simply referred to as interference hereunder) and improving communication quality.

In the description that follows, the wireless base stations will each be referred to as an access point or AP and the wireless terminal stations each as a station or STA.

### <Configuration example of the wireless communication apparatus 101>

FIG. 1 is a block diagram depicting a configuration example of a wireless communication apparatus 101 to which the present technology is applied.

The wireless communication apparatus 101 functions as an access point that communicates wirelessly with other access points and stations.

Also, the wireless communication apparatus 101 communicates with other servers (not depicted) via at least another access point, a backhaul, or a trunk line communication network such as the Internet. Note that, in FIG. 1, those components of the wireless communication apparatus 101 that communicate with other servers are omitted.

The wireless communication apparatus 101 includes a communication module 111 and a data processing section 112.

The communication module 111 communicates wirelessly with other access points and stations.

The data processing section 112 extracts various kinds of information from signals sent from the communication module 111 and supplies the extracted information and generated information or the like to the communication module 111.

The communication module 111 includes an antenna 121 and a wireless communication module 122.

The antenna 121 transmits wirelessly various signals fed from the wireless communication module 122. The antenna 121 further receives wirelessly transmitted signals and supplies the received signals to the wireless communication module 122.

The wireless communication module 122 is configured with a semiconductor chip, for example. While exchanging information with the data processing section 112 as needed, the wireless communication module 122 supplies various signals to the antenna 121 for transmission therefrom, and performs processes corresponding to the signals received by the antenna 121.

The wireless communication module 122 includes a communication section 131 and a control section 132.

Under control of the control section 132, the communication section 131 communicates wirelessly with other access points and stations via the antenna 121.

The control section 132 performs control or the like of the operation of the wireless communication module 122 as a whole.

The communication section 131 includes an antenna sharing section 141, an RF reception section 142, a digital signal conversion section 143, a signal reception section 144, a signal generation section 145, an analog signal conversion section 146, and an RF transmission section 147.

The antenna sharing section 141 is a switch that performs switchover between transmission and reception. That is, the antenna sharing section 141 supplies the antenna 121 with signals fed from the RF transmission section 147 and supplies the RF reception section 142 with signals fed from the antenna 121.

The RF reception section 142 is configured with a low noise amplifier, an AGC (Auto Gain Control) section, a frequency converter, and a filter, for example. The RF reception section 142 allows the antenna 121 to receive signals via the antenna sharing section 141. The RF reception section 142 performs various processes such as amplification, gain adjustment, frequency conversion, and filtering on the received signals as needed, and supplies the signals resulting from the processing to the digital signal conversion section 143. The RF reception section 142 obtains the reception strength of the received signal as needed and supplies the control section 132 with the received signal strength.

The digital signal conversion section 143 subjects the signal fed from the RF reception section 142 to AD (Analog Digital) conversion for conversion from analog to digital form and supplies the converted signal to the signal reception section 144.

Under control of the control section 132, the signal reception section 144 performs various processes such as demodulation and decoding on the signal fed from the digital signal conversion section 143, and supplies the signal resulting from the processing to the control section 132.

The signal generation section 145 performs an encoding process or the like on the basis of information or the like fed from the control section 132 to generate a signal in a predetermined format, carries out a modulation process on the generated signal, and supplies the modulated signal to the analog signal conversion section 146.

The analog signal conversion section 146 subjects the signal fed from the signal generation section 145 to DA (Digital Analog) conversion for conversion from digital to analog form and supplies the converted signal to the RF transmission section 147.

The RF transmission section 147 is configured with a frequency converter, an amplifier, and a filter, for example. The RF transmission section 147 performs such processes as frequency conversion, amplification, and filtering on the signal fed from the analog signal conversion section 146. The RF transmission section 147 supplies the processed signal to the antenna 121 via the antenna sharing section 141 to have the signal transmitted from the antenna 121.

The control section 132 includes a communication control section 151 and an observation section 152.

The communication control section 151 controls a communication process performed by the wireless communication module 122. Also, the communication control section 151 supplies the data processing section 112 with signals fed from the communication section 131, for example, and supplies the communication section 131 with information fed from the data processing section 112. Furthermore, the communication control section 151 controls the communication section 131 (RF transmission section 147 therein), for example, to regulate the strength of the signal transmitted from the antenna 121.

On the basis of signals from the signal reception section 144, the observation section 152 observes interference near the wireless communication apparatus 101. That is, the observation section 152 observes the frequencies and strength of signals (interference signals) received from other than the access point and station being connected. As needed, the observation section 152 causes a storage section (not depicted) to store data indicative of the status of the observed interference.

### <Configuration example of the wireless communication apparatus 201>

FIG. 2 is a block diagram depicting a configuration example of a wireless communication apparatus 201 to which the present technology is applied. Note that in FIG. 2, the components corresponding to those of the wireless communication apparatus 101 in FIG. 1 are designated by the same reference signs and a description thereof will be omitted hereunder where redundant.

The wireless communication apparatus 201 functions as a station that communicates wirelessly with an access point.

The wireless communication apparatus 201 includes a communication module 211 and a data processing section 212.

The communication module 211 communicates wirelessly with the access point.

The data processing section 212 extracts diverse information from signals fed from the communication module 211 and supplies the extracted information and generated information to the communication module 211.

Compared with the communication module 111 in FIG. 1, the communication module 211 includes a wireless communication module 221 in place of the wireless communication module 122.

The wireless communication module 221 is configured with a semiconductor chip, for example. While exchanging information with the data processing section 212 as needed, the wireless communication module 221 supplies various signals to the antenna 121 for transmission therefrom, and performs processes corresponding to the signals received by the antenna 121.

Compared with the wireless communication module 122 in FIG. 1, the wireless communication module 221 includes a control section 231 in place of the control section 132.

The control section 231 performs control or the like of the operation of the wireless communication module 221 as a whole.

The control section 231 includes a communication control section 241 and an observation section 242.

The communication control section 241 controls a communication process performed by the wireless communication module 221. Also, the communication control section 241 supplies the data processing section 212 with signals fed from the communication section 131 and supplies the communication section 131 with information fed from the data processing section 212, for example. Further, the communication control section 241 controls the communication section 131 (RF transmission section 147 therein) to regulate the strength of signals transmitted from the antenna 121, for example. In another example, the communication control section 241 selects the access point to which the wireless communication apparatus 201 is connected.

On the basis of signals from the signal reception section 144, the observation section 242 starts observing interference near the wireless communication apparatus 201. That is, the observation section 242 observes the frequencies and strength or the like of signals (interference radio waves) received from other than the currently connected access point. As needed, the observation section 242 causes a storage section (not depicted) to store data indicative of the status of the observed interference.

### <Connection process performed by the access point>

Next, explained next with reference to the flowchart in FIG. 3 and the sequence diagram in FIG. 4 is the connection process performed by the access point (wireless communication apparatus 101 in FIG. 1).

Incidentally, the flowchart in FIG. 4 is focused on the process in which the access point connects to the station. A description of other processes (e.g., disconnection process) is omitted where appropriate.

Furthermore, the connection process is started when the power supply of the access point is turned on and terminated when its power supply is turned off, for example.

In step S1, the observation section 152 starts observing interference. Specifically, on the basis of signals fed from the signal reception section 144, the observation section 152 starts observing the frequencies and strength of signals (interference radio waves) received from other than the access point and station being connected. As needed, the observation section 152 causes the storage section (not depicted) to store data indicative of the status of the observed interference.

Note that it is not necessary to observe interference continuously. Instead, the observation of interference may be performed intermittently.

In step S2, the communication control section 151 determines whether or not it is time to transmit a Beacon frame. For example, in the case where each access point transmits the Beacon frame as a broadcast signal periodically at predetermined intervals and where the communication control section 151 determines that it is time to transmit the Beacon frame, control is transferred to step S3.

In step S3, the access point transmits the Beacon frame.

Specifically, the communication control section 151 supplies the signal generation section 145 with information to be set in each field of the Beacon frame and orders the signal generation section 145 to generate the Beacon frame.

On the basis of the information fed from the communication control section 151, the signal generation section 145 generates the Beacon frame and supplies it to the RF transmission section 147 via the analog signal conversion section 146.

The RF transmission section 147 transmits the Beacon frame via the antenna sharing section 141 and antenna 121.

Thereafter, control is transferred to step S4.

FIG. 5 depicts a typical Beacon frame format.

The Beacon frame includes a Frame Type field, a Duration field, a Receiver Address field, a Transmitter Address field, a Beacon body field, and an FCS (Frame Check Sequence) field.

The Frame Type field is a field in which information indicative of the frame type is set. The information indicative of the Beacon frame is set in this field.

The Duration field is a field in which information indicative of the duration or the like of a frame transmission period is set.

The Receiver Address field is a field in which the address (e.g., MAC address) of another access point or station receiving the frame is set. Since the Beacon frame is broadcast without specifying a receiver, a broadcast address is set in this field.

The Transmitter Address field is a field in which the address (e.g., MAC address) of the access point or station transmitting the frame is set. In this field, the address of the access point transmitting the Beacon frame is set.

The Beacon body field is a field in which diverse information transmitted by the Beacon frame is set. For example, the Beacon body field includes interference information (Interference Info).

The Interference Info is information that indicates the status of interference at the access point. For example, the Interference Info includes channel interference information (Channel Interference Info).

The Channel Interference Info is information that indicates the status of interference on each subchannel of the access point. The Channel Interference Info regarding each subchannel includes a Channel ID and at least one item of Detailed Info.

Here, the subchannel is the smallest unit in which the access point uses available media (frequency resources). The media available for the access point are divided into multiple subchannels in a predetermined frequency band each.

The Channel ID is an ID that identifies each subchannel.

The Detailed Info is information that indicates detailed status of interference on each subchannel. The Detailed Info includes Interference Type information and Interference Strength information.

The Interference Type information is information that indicates the type of interference. The types of interference are categorized by source or by cause of interference or the like. For example, the categorized types of interference include IEEE 802.11 systems, microwave ovens, and LTE (Long Term Evolution)-LAA (Licensed-Assisted Access). Also, the IEEE 802.11 systems may be categorized in more detail by network ID (e.g., BSS ID, BSS Color).

The Interference Strength information is information that indicates the strength (power) of interference of the type indicated by the Interference Type information. For example, the Interference Strength information indicates a distribution of the strength of interference per unit time (e.g., per second).

For example, the Interference Strength information indicates a distribution of the strength of interference observed in a unit time. More specifically, the Interference Strength information indicates a rate of each strength during the time in which interference is observed within the unit time. For instance, the strength of interference are divided into multiple classes (ranges of strength) each having a predetermined class width. The rate of the interference observed in each class (strength of each range) within the unit time during the observation time (referred to as the time occupancy rate hereunder) is then indicated by the Interference Strength information. For example, in the case where the unit time is one second and where the total time in which the interference with its strength in a class × 1 is observed amounts to 400 milliseconds, the time occupancy rate of the interference with its strength in the class × 1 is 40%.

Alternatively, the Interference Strength information indicates a distribution of the strength of interference observed within the unit time. For example, the number of times interference observed within the unit time is indicated per class (per range of strength).

As another alternative, the Interference Strength information indicates a distribution of chronological interference episodes observed within the unit time. For example, the strength of interference observed within the unit time are indicated chronologically in order of observation.

Note that, in the case where multiple types of interference are observed on a given subchannel, the Channel Interference Info regarding the subchannel is set with multiple items of Detailed Info for each Interference Type.

The FCS field is a field in which a Frame Check Sequence is set.

In step S2 back in FIG. 3, in the case where it is determined that it is not time to transmit the Beacon frame, the processing of step S3 is skipped. Control is then transferred to step S4.

In step S4, the communication control section 151 determines whether or not a Probe Request frame is received.

For example, in the case where the Probe Request frame transmitted from the station in step S53 of FIG. 6, to be discussed later, is received via the antenna 121 and antenna sharing section 141, the RF reception section 142 supplies the Probe Request frame to the communication control section 151 via the digital signal conversion section 143 and signal reception section 144. This causes the communication control section 151 to determine that the Probe Request frame is received. Control is then transferred to step S5.

In step S5, the access point transmits a Probe Response frame.

Specifically, the communication control section 151 supplies the signal generation section 145 with information to be set in each field of the Probe Response frame, and orders the signal generation section 145 to generate the Probe Response frame.

On the basis of the information fed from the communication control section 151, the signal generation section 145 generates the Probe Response frame and supplies it to the RF transmission section 147 via the analog signal conversion section 146.

Note that the Probe Response frame includes at least the Interference Info in FIG. 5. Furthermore, the Receiver Address field is set with the address of the station transmitting the Probe Request frame.

The RF transmission section 147 transmits the Probe Response frame as a broadcast signal via the antenna sharing section 141 and antenna 121.

Thereafter, control is transferred to step S6.

On the other hand, in the case where it is determined in step S4 that the Probe Request frame is not received, the processing of step S5 is skipped. Control is then transferred to step S6.

In step S6, the communication control section 151 determines whether or not the station requests connection. In the case where it is determined that the station does not request connection, control is returned to step S2.

Thereafter, the processing of steps S2 to S6 is repeated until it is determined in step S6 that the station requests connection.

On the other hand, in the case where the RF reception section 142 in step S6 receives, via the antenna 121 and antenna sharing section 141, an Authentication Request frame transmitted from the station in step S61 of FIG. 7, to be discussed later, the RF reception section 142 supplies the Authentication Request frame to the communication control section 151 via the digital signal conversion section 143 and signal reception section 144. This causes the communication control section 151 to determine that the station requests connection. Control is then transferred to step S7.

In step S7, the access point performs the connection process.

Although not explained in detail, the access point performs the process of connecting with the connection requesting station in accordance with the protocol depicted in FIG. 4.

First, in reply to the received Authentication Request frame, the access point transmits an Authentication Response frame to the station.

Next, the access point then receives an Association Request frame from the station. In reply, the access point transmits the Authentication Response frame to the station.

Next, the access point exchanges encryption keys with the station.

Next, the access point then receives an Ack Set Request frame from the station. In reply, the access point transmits an Ack Set Response frame to the station.

In this manner, the access point establishes connection with the station. The access point then starts exchanging or the like of data with the station.

Thereafter, control is returned to step S2, and the processing of step S2 and subsequent steps is repeated.

### <Connection process performed by the station>

Next, explained below with reference to the flowcharts in FIGS. 6 and 7 and the sequence diagram in FIG. 4 is the connection process performed by the station (wireless communication apparatus 201 in FIG. 2) in conjunction with the process in FIG. 3 carried out by the access point.

Incidentally, the flowcharts in FIGS. 6 and 7 are focused on the process in which the station connects with the access point. A description of other processes (e.g., disconnection process) or the like is omitted where appropriate.

Furthermore, the connection process is started when the power supply of the access point is turned on and terminated when its power supply is turned off, for example.

In step S51, the station observes a Beacon frame for a predetermined time period. That is, the station waits for the Beacon frame to arrive for the predetermined time period in carrying out a reception process by which the Beacon frame transmitted from the station is received.

In step S52, the communication control section 241 determines whether or not the Beacon frame is received.

In the case where it is determined that the Beacon frame is not received, control is transferred to step S53.

In step S53, the station transmits a Probe Request frame.

Specifically, the communication control section 241 supplies the signal generation section 145 with information to be set in each field of the Probe Request frame, and orders the signal generation section 145 to generate the Probe Request frame.

On the basis of the information fed from the communication control section 241, the signal generation section 145 generates the Probe Request frame and supplies it to the RF transmission section 147 via the analog signal conversion section 146.

Note that since the Probe Request frame is broadcast without specifying a receiver, a broadcast address is set in the Receiver Address field of the frame.

The RF transmission section 147 transmits the Probe Request frame via the antenna sharing section 141 and antenna 121.

In step S54, the station determines whether or not a Probe Response frame is received. In the case where it is determined that the Probe Response frame is not received, control is returned to step S51.

Thereafter, the processing of steps S51 to S54 is repeated until the Beacon frame is determined to be received in step S52 or until the Probe Response frame is determined to be received in step S54.

On the other hand, in the case where the RF reception section 142 in step S54 receives, via the antenna 121 and antenna sharing section 141, the Probe Response frame transmitted from the access point in the above described step S5 of FIG. 3, the RF reception section 142 supplies the Probe Response frame to the communication control section 241 via the digital signal conversion section 143 and signal reception section 144. This causes the communication control section 241 to determine that the Probe Response frame is received. Control is then transferred to step S55.

Note that, at this time, there may be a case where the station receives the Probe Response frames from two or more access points.

Furthermore, in the case where the RF reception section 142 in step S52 receives, via the antenna 121 and antenna sharing section 141, the Beacon frame transmitted from the access point in the above described step S3 of FIG. 3, the RF reception section 142 supplies the Beacon frame to the communication control section 241 via the digital signal conversion section 143 and signal reception section 144. This causes the communication control section 241 to determine that the Beacon frame is received. The processing of steps S53 and S54 is then skipped and control is transferred to step S55.

Note that, at this time, there may be a case where the station receives the Beacon frames from two or more access points.

In step S55, the communication control section 241 determines whether or not two or more access points are detected. In the case where the communication control section 241 receives the Beacon frames or Probe Response frames from two or more access points, the communication control section 241 determines that two or more access points are detected. Control is then transferred to step S56.

In step S56, the communication control section 241 determines whether or not the difference in reception strength between the access point having the highest reception strength and the access point having the second-highest reception strength is small. Specifically, given the two or more detected access points, the communication control section 241 calculates the difference in reception strength between the access point having the highest reception strength of the Beacon frame or Probe Response frame (referred to as the strongest access point hereunder) on one hand, and the access point having the second-highest reception strength of the Beacon frame or Probe Response frame (referred to as the second-strongest access point hereunder) on the other hand. In the case where the calculated difference in reception strength is smaller than a predetermined threshold value, the communication control section 241 determines that the difference in reception strength between the strongest access point and the second-strongest access point is small. Control is then transferred to step S57.

Incidentally, the difference in reception strength between two access points constitutes a difference in communication quality between directions primarily from the access points to the station.

In step S57, the communication control section 241 determines whether or not the difference in interference amount (amount of interference radio waves) between the access point having the highest reception strength (strongest access point) and the access point having the second-highest reception strength (second-strongest access point) is large.

Specifically, the communication control section 241 calculates the amount of interference at the strongest access point on the basis of the Interference Info received from the strongest access point.

For example, the communication control section 241 calculates the amount of interference for each interference type by obtaining the product of the reception strength of interference (interference radio waves)(RSSI: Received Signal Strength Indicator) and the reception period (time) for each interference type. The communication control section 241 then calculates the amount of interference at the strongest access point by obtaining a total or an average of the interference amounts for the different interference types.

Alternatively, the communication control section 241 may detect a maximum value of the reception strength (RSSI) of interference (interference radio waves) for each interference type. The communication control section 241 may then calculate a total or an average of the maximum values of the reception strength for the different interference types.

Note that the above described method of calculating the interference amount is only an example. Some other suitable method may be adopted instead.

Furthermore, using a method similar to that of calculating the amount of interfere at the strongest access point, the communication control section 241 calculates the amount of interference at the second-strongest access point.

The communication control section 241 further calculates the difference in interference amount between the strongest access point and the second-strongest access point. In the case where the calculated difference in interference amount is equal to or larger than a predetermined threshold value, the communication control section 241 determines that the difference in interference amount between the strongest access point and the second-strongest access point is large. Control is then transferred to step S58.

Incidentally, the difference in interference amount between two access points constitutes a difference in communication quality between directions primarily from the station to the access points.

In step S58, the communication control section 241 selects the access point having the smaller interference amount as the connection destination. That is, in the case where the difference in reception strength between the strongest access point and the second-strongest access point is small and where the difference in interference amount therebetween is large, the communication control section 241 selects the access point having the smaller interference amount of the two as the connection destination. That is, as a condition for selecting the connection destination, the interference amount takes precedence over the reception strength.

Thereafter, control is transferred to step S61.

On the other hand, in the case where the calculated amount of interference is smaller than the predetermined threshold value in step S57, the communication control section 241 determines that the difference in interference amount between the strongest access point and the second-strongest access point is small. Control is then transferred to step S59.

Furthermore, in the case where the calculated difference in reception strength is equal to or larger than the predetermined threshold value in step S56, the communication control section 241 determines that the difference in reception strength between the strongest access point and the second-strongest access point is large. Control is then transferred o step S59.

In step S59, the communication control section 241 selects the access point having the highest reception strength (strongest access point) as the connection destination. That is, in the case where the difference in reception strength between the strongest access point and the second-strongest access point is large, the communication control section 241 selects the access point having the higher reception strength of the two as the connection destination regardless of the difference in interference amount therebetween. In the case where the difference in interference amount between the strongest access point and the second-strongest access point is small, the communication control section 241 selects the access point having the higher reception strength of the two as the connection destination regardless of the difference in reception strength therebetween. That is, as a condition for selecting the connection destination, the reception strength takes precedence over the interference amount.

Thereafter, control is transferred to step S61.

On the other hand, in the case where it is determined in step S55 that only one access point is detected, control is transferred to step S60.

In step S60, the communication control section 241 selects the detected access point as the connection destination.

Thereafter, control is transferred to step S61.

In step S61, the station requests connection to the access point selected as the connection destination.

Specifically, the communication control section 241 supplies the signal generation section 145 with information to be set in each field of the Authentication Request frame, and orders the signal generation section 145 to generate the Authentication Request frame.

On the basis of the information fed from the communication control section 241, the signal generation section 145 generates the Authentication Request frame and supplies it to the RF transmission section 147 via the analog signal conversion section 146.

Note that the Receiver Address field in the Authentication Request frame is set with the address of the access point selected as the connection destination.

The RF transmission section 147 transmits the Authentication Request frame to the selected access point via the antenna sharing section 141 and the antenna 121.

In step S62, the station performs the connection process.

Although not explained in detail, the station performs the process of connecting to the connection destination access point in accordance with the protocol depicted in FIG. 4.

First, the station receives from the access point an Authentication Response frame in rely to the transmitted Authentication Request frame.

Next, the station transmits an Association Request frame to the access point and receives an Association Response frame from the access point in reply.

Next, the station then exchanges encryption keys with the access point.

Next, the station then transmits an Ack Set Request frame to the access point and receives an Ack Set Response frame from the access point in reply.

In this manner, the station establishes connection with the access point. The station starts exchanging or the like of data with the access point.

In step S63, the communication control section 241 determines whether or not the connection with the access point is disconnected. In the case where the connection with the access point is determined to be not disconnected, control is transferred to step S64.

In step S64, the communication control section 241 determines whether or not an access point other than the currently connected access point is detected. In the case where the Beacon frame is not received from any access point other than the currently connected access point, the communication control section 241 determines that no access point other than the currently connected access point is detected. Control is then returned to step S63.

Thereafter, the processing of steps S63 and S64 is repeated until the connection with the access point is determined to be disconnected in step S63 or until an access point other than the currently connected access point is determined to be detected in step S64.

On the other hand, in the case where the communication control section 241 in step S64 receives a Beacon frame from an access point other than the currently connected access point, the communication control section 241 determines that an access point other than the currently connected access point is detected. Control is then transferred to step S65.

In step S65, the communication control section 241 determines whether or not the difference in reception strength between the detected access point and the currently connected access point is small. Specifically, in a process similar to that of the above described step S56, the communication control section 241 calculates the difference in reception strength between the detected access point and the currently connected access point. In the case where the calculated difference in reception strength is smaller than the predetermined threshold value, the communication control section 241 determines that the difference in reception strength between the detected access point and the currently connected access point is small. Control is then transferred to step S66.

Incidentally, the threshold value used in step S56 and that used in step S65 may be set to be the same or different from one another.

In step S66, the communication control section 241 determines whether or not the amount of interference at the detected access point is smaller than that at the currently connected access point. Specifically, in a process similar to that of the above described step S57, the communication control section 241 calculates the amount of interference at the detected access point and that at the currently connected access point. In the case where the communication control section 241 determines that the amount of interference at the detected access point is smaller than that at the currently connected access point, control is transferred to step S67.

In step S67, the communication control section 241 determines whether or not the difference in interference amount between the detected access point and the currently connected access point is large. In the case where the difference in interference amount between the detected access point and the currently connected access point is equal to or larger than the predetermined threshold value, the communication control section 241 determines that the difference therebetween is large. Control is then transferred to step S69.

Incidentally, the threshold value used in step S57 and that used in step S67 may be set to be the same or different from one another.

On the other hand, in the case where the calculated difference in reception strength is equal to or larger than the predetermined threshold value in step S65, the communication control section 241 determines that the difference in reception strength between the detected access point and the currently connected access point is large. Control is then transferred to step S68.

In step S68, the communication control section 241 determines whether or not the reception strength of the detected access point is higher than that of the currently connected access point. In the case where the reception strength of the detected access point is determined to be higher than that of the currently connected access point, control is transferred to step S69.

In step S69, the communication control section 241 selects the detected access point as the connection destination.

Thereafter, control is returned to step S61. The processing of step S61 and subsequent steps is then repeated in order to implement the process of connecting to the access point. That is, in the case where the difference in reception strength between the detected access point and the currently connected access point is small and where the amount of interference at the detected access point is significantly smaller than that at the currently connected access point, or where the reception strength of the detected access point is significantly higher than that of the currently connected access point, the connection destination is changed from the currently connected access point to the detected access point.

On the other hand, in the case where it is determined in step S66 that the amount of interference at the detected access point is equal to or larger than that at the currently connected access point, in the case where it is determined in step S67 that the difference in interference amount between the detected access point and the currently connected access point is small, or in the case where it is determined in step S68 that the reception strength of the detected access point is equal to or lower than that of the currently connected access point, control is returned to step S63. The processing of step S63 and subsequent steps is then repeated. That is, the access point remains unchanged in this case.

Furthermore, in the case where it is determined in step S63 that the connection to the access point is disconnected, control is returned to step S51. The processing of step S51 and subsequent steps is then repeated.

Here, explained below with reference to FIGS. 8 and 9 is a specific example of the method of selecting the connection destination for the station.

FIGS. 8 and 9 depict a typical wireless communication system that includes access points AP1 to AP3. The access points AP1 to AP3 are set up in rooms 301a to 301c, respectively. Note that it is assumed that the bandwidth of available frequencies, the number of subchannels, and the signal transmission strength are the same for all access points AP1 to AP3.

The room 301a is provided with a doorway 302a. A doorway 302b is provided between the rooms 301a and 301b. A doorway 302c is also provided between the rooms 301a and 301c.

For example, in the case where the station STA1 is near the doorway 302a as depicted in A of FIG. 8, the access point AP1 is closest to the station STA1, so that the strength of reception from the access point AP1 is highest for the station STA1. Thus, the station STA1 selects the access point AP1 as the connection destination.

Thereafter, in the case where the station STA1 moves closer to the doorway 302b as depicted in B of FIG. 8, the access point AP2 is closest to the station STA1, so that the strength of reception from the access point AP2 is highest for the station STA1. The station STA1 then changes the connection destination from the access point AP1 to the access point AP2. The change shortens the transmission distance between the station STA1 and the connection destination access point, thereby improving communication rate and communication quality therebetween.

On the other hand, in the case where the amount of interference at the access point AP2 is larger than that at the access point AP1 and where the difference in interference amount therebetween is large as depicted in FIG. 9, the station STA1 continues connection to the access point AP1 without changing the connection destination. Aborting the change prevents the station STA1 from connecting to the access point AP2 and thereby forestalls reductions in communication rate and communication quality.

In this manner, on the basis of the Interference Info regarding each access point, the station can easily select an appropriate access point from among multiple access points. As a result, the effect of interference may be suppressed and communication quality may be improved, for example.

### <Transmission strength control process>

It is explained, for example, that the station selects the access point on the basis of the Interference Info regarding each access point. Alternatively, a connectable range of the station (referred to as the cell range hereunder) may be adjusted by controlling the strength of transmitting the Beacon frame or Probe Response frame based on the Interference Info regarding each access point.

Here, explained below with reference to the flowchart of FIG. 10 is the transmission strength control process performed by the access point.

In step S101, the access point shares the Interference Info with other access points.

Here, an example of the method for sharing the Interference Info between access points is explained.

For example, the communication control section 151 supplies the signal generation section 145 with information to be set in each field of an information sharing frame and orders the signal generation section 145 to generate the information sharing frame.

On the basis of the information fed from the communication control section 151, the signal generation section 145 generates the information sharing frame and supplies it to the RF transmission section 147 via the analog signal conversion section 146.

Note that the information sharing frame includes at least the Interference Info in FIG. 5. Since the information sharing frame is broadcast to other access points, a broadcast address is set in the Receiver Address field of the frame.

The RF transmission section 147 transmits the information sharing frame via the antenna sharing section 141 and antenna 121.

Furthermore, the RF reception section 142 receives, via the antenna 121 and antenna sharing section 141, the information sharing frame transmitted from other access points. The RF reception section 142 supplies the information sharing frame to the communication control section 151 via the digital signal conversion section 143 and signal reception section 144.

In this manner, the Interference Info regarding each access point is shared between the access points.

Alternatively, the information sharing frame may be transmitted and received between access points via the station, for example.

As another alternative, the information sharing frame may be transmitted and received between access points via communication networks such as the Internet.

Note that the method of sharing the Interference Info is discretionary. Some other suitable method may be adopted instead.

In step S102, the communication control section 151 adjusts the transmission strength. For example, the communication control section 151 controls the RF transmission section 147 to adjust the strength of transmitting the frame in which the Interference Info is to be sent to the station (e.g., Beacon frame or Probe Response frame). For example, the smaller the amount of interference observed by the observation section 152 is, the higher the transmission strength is adjusted to be. The larger the observed interference amount is, the lower the transmission strength is adjusted to be.

For example, in the case where the amount of interference at the access point AP1 is smaller than that at the access point AP2 as depicted in FIG. 11, the transmission strength of the access point AP1 is adjusted to be higher than that of the access point AP2. As a result, the cell range C1 of the access point AP1 is set to be larger than the cell range C2 of the access point AP2.

In this manner, it is possible to reduce the effect of interference with communication between the station and the access point without the station carrying out any specific process of interference reduction.

Note that each access point may adjust its relative transmission strength in coordination with other access points. Alternatively, each access point may uniquely set its transmission strength based on the amount of interference without coordination with other access points.

In the former case above, even if the observed amount of interference is the same, the transmission strength is adjusted in keeping with the amount of interference nearby. For example, the larger the amount of interference nearby, the higher the transmission strength is adjusted to be. The smaller the amount of interference nearby is, the lower the transmission strength is adjusted to be.

Note that, for example, the lower limit of the transmission strength may be subjected to constraints such that the connection of each access point to the currently connected station will not be disconnected.

### <<2. Modification Examples>>

Modification examples of the above described embodiment of the present technology are explained below.

It is explained, for example, that the communication control section 241 of the station selects the connection destination from between two access points, i.e., the strongest access point or the second-strongest access point. Alternatively, in the case where three or more access points are detected, these access points may be compared in terms of reception strength and interference amount before the connection destination is selected therefrom.

As another alternative, the communication control section 241 of the station may select the connection destination on the basis of not only the status of interference observed by the access points but also the status of interference observed by the station, for example. For instance, in the case where there exists a subchannel (i.e., corresponding frequency band) on which the amount of interference is small at an access point but large at the station, the degradation of communication quality due to the interference in a direction from the station to the access point is presumably small, whereas the degradation of communication quality due to the interference in a direction from the access point to the station is presumably large. In such a case, the communication control section 241 may stop using the subchannel in question.

As a further alternative, for example, the communication control section 151 of each access point may limit the available subchannels based on the observed status of interference. For example, of the subchannels assigned to each access point, those with an interference amount smaller than a threshold value may be enabled by the communication control section 151 for use and those with an interference amount equal to or larger than the threshold value may be disabled thereby.

As another alternative, for example, in the case where the access point is unable to maintain communication quality due to a large interference amount or the like as depicted in the sequence diagram of FIG. 12, the access point may request the station to change the connection destination. Specifically, after connection is established between the access point and the station in accordance with the protocol discussed above with reference to FIG. 4, the access point may transmit a Handover Request frame to the station. In reply, the station cancels the connection to the access point, searches for another access point, and connects to the new access point.

In this manner, the effect of interference is averted and communication quality is improved. In this case, however, the station and the access point need to perform the connection process once. Preferably, using the above described method, the station may select the connection destination based on the Interference Info before performing the connection process. This allows the station to connect to an appropriate access point more quickly.

It is also explained, for example, that the wireless communication module 122 (FIG. 1) and the wireless communication module 221 (FIG. 2) are each configured with a semiconductor chip. For example, the communication module 111 (FIG. 1) and the communication module 211 (FIG. 2) may each be configured with a single semiconductor chip.

It is further explained, for example, that the access point transmits the Interference Info using the Beacon frame or Probe Request frame. Alternatively, the access point may transmit the Interference Info using some other suitable broadcast signal.

Furthermore, the present technology may be applied not only to the communications based on the abovementioned IEEE 802.11 standard but also to all communications in accordance with methods by which a wireless terminal station selects the connection destination from among multiple base stations.

### <<3. Others>>

### <Configuration example of the computer>

The series of processing described above may be executed either by hardware or by software. Where the processing is to be carried out by software, the programs constituting the software are installed into a suitable computer. Here, variations of the computer include one with the software installed beforehand in its dedicated hardware and, for example, a general-purpose personal computer, equipment capable of executing diverse functions based on the programs installed therein.

FIG. 13 is a block diagram depicting a configuration example of the computer that executes the abovementioned series of processing using programs.

In a computer 500, a CPU (Central Processing Unit) 501, a ROM (Read Only Memory) 502, and a RAM (Random Access Memory) 503 are interconnected via a bus 504.

The bus 504 is further connected with an input/output interface 505. The input/output interface 505 is connected with an input section 506, an output section 507, a storage section 508, a communication section 509, and a drive 510.

The input section 506 may be configured with input switches, buttons, a microphone, and an imaging element. The output section 507 may be configured with a display and speakers. The storage section 508 may be configured with a hard disk and a nonvolatile memory. The communication section 509 may be configured with a network interface. The drive 510 drives a removable medium 511 such as a magnetic disk, an optical disk, a magnetooptical disk, or a semiconductor memory.

In the computer 500 configured as described above, the CPU 501 may perform the abovementioned series of processing by loading suitable programs from the storage section 508 into the RAM 503 via the input/output interface 505 and bus 504 and by executing the loaded programs.

The programs to be executed by the computer 500 (CPU 501) may be recorded on the removable medium 511 as packaged media when offered. The programs may also be offered via wired or wireless transmission media such as local area networks, the Internet, and digital satellite broadcasting.

In the computer 500, the programs may be installed into the storage section 508 from the removable medium 511 attached to the drive 510 via the input/output interface 505. Furthermore, the programs may also be installed into the storage section 508 after being received by the communication section 509 via wired or wireless transmission media. The programs may alternatively be preinstalled in the ROM 502 or in the storage section 508.

Note that the programs executed by the computer may each be processed chronologically, i.e., in the sequence depicted in this description, in parallel with other programs, or in otherwise appropriately timed fashion such as when the program is invoked as needed.

Furthermore, in this description, the term "system" refers to an aggregate of multiple components (e.g., apparatuses or modules (parts)). It does not matter whether or not all components are housed in the same enclosure. Thus, a system may be configured with multiple apparatuses housed in separate enclosures and interconnected via a network, or with a single apparatus in a single enclosure that houses multiple modules.

In addition, the present technology is not limited to the embodiment discussed above and may be implemented in diverse variations so far as they are within the spirit and scope of the technology.

For example, the present technology may be implemented as a cloud computing setup in which a single function is processed cooperatively by multiple networked apparatuses on a shared basis.

Also, each of the steps discussed in reference to the above described flowcharts may be executed either by a single apparatus or by multiple apparatuses on a shared basis.

Furthermore, in the case where a single step includes multiple processes, these processes may be executed either by a single apparatus or by multiple apparatuses on a shared basis.

### <Typical combinations of the configured components>

The present disclosure may be implemented preferably in the following configurations.

(1) A wireless communication apparatus including:
   an observation section configured to observe interference radio waves; and
   a communication section configured to transmit a broadcast signal including interference information indicative of status of the interference radio waves, in which
   the wireless communication apparatus functions as one of multiple wireless base stations included in a wireless communication system.
(2) The wireless communication apparatus according to (1), in which
   the interference information includes a strength of the interference radio waves.
(3) The wireless communication apparatus according to (2), in which
   the interference information includes a distribution of the strength of the interference radio waves.
(4) The wireless communication apparatus according to (2) or (3), in which
   the interference information includes a type of the interference radio waves.
(5) The wireless communication apparatus according to (4), in which
   the interference information includes the strength of each of the types of the interference radio waves.
(6) The wireless communication apparatus according to any one of (1) to (4), in which
   the interference information indicates status of the interference radio waves on each of subchannels.
(7) The wireless communication apparatus according to (6), further including:
   a communication control section configured to control the subchannel for use on the basis of the status of the interference radio waves on each subchannel.
(8) The wireless communication apparatus according to any one of (1) to (7), further including:
   a communication control section configured to control strength of transmitting the broadcast signal on the basis of the status of the interference radio waves.
(9) The wireless communication apparatus according to (8), in which
   the larger the amount of the interference radio waves is, the lower the strength of transmitting the broadcast signal is set by the communication control section.
(10) The wireless communication apparatus according to (8) or (9), in which
   the communication control section further controls strength of transmitting the broadcast signal on the basis of the status of the interference radio waves at those of the wireless base stations that are nearby.
(11) The wireless communication apparatus according to (10), in which
   the communication section receives the broadcast signal from the other wireless base stations.
(12) The wireless communication apparatus according to any one of (1) to (11), in which
   the broadcast signal includes a beacon frame based on IEEE 802.11 standard.
(13) A wireless communication method including:
   causing a wireless communication apparatus to observe interference radio waves;
   causing the wireless communication apparatus to transmit a broadcast signal including interference information indicative of status of the interference radio waves; and
   enabling the wireless communication apparatus to function as one of multiple wireless base stations included in a wireless communication system.
(14) A wireless communication apparatus including:
   a communication section configured to receive from multiple wireless base stations a broadcast signal including interference information indicative of status of interference radio waves, in which
   the wireless communication apparatus functions as a wireless terminal station.
(15) The wireless communication apparatus according to (14), further including:
   a communication control section configured to select a connection destination from a plurality of the wireless base stations on the basis of the interference information.
(16) The wireless communication apparatus according to (15), in which
   the communication control section selects the connection destination based on the status of the interference radio waves at a plurality of the wireless base stations and on strength of reception from a plurality of the wireless base stations.
(17) The wireless communication apparatus according to (16), in which
   the communication control section selects the connection destination on the basis of the strength of reception either in a case where the difference in reception strength between the wireless base station with the highest reception strength constituting the strongest wireless base station on one hand and the other wireless base stations on the other hand is equal to or larger than a first threshold value, or in a case where the difference in interference radio wave amount between the strongest wireless base station and the other wireless base stations is smaller than a second threshold value, and the communication control section further selects the connection destination on the basis of the interference radio wave amount in a case where the difference in reception strength between the strongest wireless base station and the other wireless base stations is smaller than the first threshold value and where the difference in interference radio wave amount between the strongest wireless base station and the other wireless base stations is equal to or larger than the second threshold value.
(18) The wireless communication apparatus according to any one of (15) to (17), further including:
   an observation section configured to observe interference radio waves, in which
   the communication control section selects the connection destination on the basis of the status of the observed interference radio waves.

The advantageous effects stated in this description are only examples and not limitative of the present technology that may also provide other advantages.

### [Reference Signs List]

101 Wireless communication apparatus, 111 Communication module, 112 Data processing section, 121 Antenna, 122 Wireless communication module, 131 Communication section, 132 Control section, 142 RF reception section, 147 RF transmission section, 151 Communication control section, 152 Observation section, 201 Wireless communication apparatus, 211 Communication module, 212 Data processing section, 221 Wireless communication module, 231 Control section, 241 Communication control section, 242 Observation section, AP1 to AP3 Access point, STA1 Station

## Claims

1. A wireless communication apparatus comprising:
an observation section configured to observe interference radio waves; and
a communication section configured to transmit a broadcast signal including interference information indicative of status of the interference radio waves, wherein
the wireless communication apparatus functions as one of a plurality of wireless base stations included in a wireless communication system.

2. The wireless communication apparatus according to claim 1, wherein
the interference information includes a strength of the interference radio waves.

3. The wireless communication apparatus according to claim 2, wherein
the interference information includes a distribution of the strength of the interference radio waves.

4. The wireless communication apparatus according to claim 2, wherein
the interference information includes a type of the interference radio waves.

5. The wireless communication apparatus according to claim 4, wherein
the interference information includes the strength of each of the types of the interference radio waves.

6. The wireless communication apparatus according to claim 1, wherein
the interference information indicates status of the interference radio waves on each of subchannels.

7. The wireless communication apparatus according to claim 6, further comprising:
a communication control section configured to control the subchannel for use on a basis of the status of the interference radio waves on each subchannel.

8. The wireless communication apparatus according to claim 1, further comprising:
a communication control section configured to control strength of transmitting the broadcast signal on a basis of the status of the interference radio waves.

9. The wireless communication apparatus according to claim 8, wherein
the larger the amount of the interference radio waves is, the lower the strength of transmitting the broadcast signal is set by the communication control section.

10. The wireless communication apparatus according to claim 8, wherein
the communication control section further controls the strength of transmitting the broadcast signal on a basis of the status of the interference radio waves at those of the wireless base stations that are nearby.

11. The wireless communication apparatus according to claim 10, wherein
the communication section receives the broadcast signal from the other wireless base stations.

12. The wireless communication apparatus according to claim 1, wherein
the broadcast signal includes a beacon frame based on IEEE 802.11 standard.

13. A wireless communication method comprising:
causing a wireless communication apparatus to observe interference radio waves;
causing the wireless communication apparatus to transmit a broadcast signal including interference information indicative of status of the interference radio waves; and
enabling the wireless communication apparatus to function as one of a plurality of wireless base stations included in a wireless communication system.

14. A wireless communication apparatus comprising:
a communication section configured to receive from a plurality of wireless base stations a broadcast signal including interference information indicative of status of interference radio waves, wherein
the wireless communication apparatus functions as a wireless terminal station.

15. The wireless communication apparatus according to claim 14, further comprising:
a communication control section configured to select a connection destination from a plurality of the wireless base stations on a basis of the interference information.

16. The wireless communication apparatus according to claim 15, wherein
the communication control section selects the connection destination based on the status of the interference radio waves at a plurality of the wireless base stations and on strength of reception from a plurality of the wireless base stations.

17. The wireless communication apparatus according to claim 16, wherein
the communication control section selects the connection destination on a basis of the strength of reception either in a case where the difference in reception strength between the wireless base station with the highest reception strength constituting the strongest wireless base station on one hand and the other wireless base stations on the other hand is equal to or larger than a first threshold value, or in a case where the difference in interference radio wave amount between the strongest wireless base station and the other wireless base stations is smaller than a second threshold value, and the communication control section further selects the connection destination on a basis of the interference radio wave amount in a case where the difference in reception strength between the strongest wireless base station and the other wireless base stations is smaller than the first threshold value and where the difference in interference radio wave amount between the strongest wireless base station and the other wireless base stations is equal to or larger than the second threshold value.

18. The wireless communication apparatus according to claim 15, further comprising:
an observation section configured to observe interference radio waves, wherein
the communication control section selects the connection destination on a basis of the status of the observed interference radio waves.
